# EUROPEAN PATENT SPECIFICATION

(11) **EP 2 794 778 B1**
(45) Date of publication and mention of the grant of the patent: **13.09.2017**
(21) Application number: 12858756.5
(22) Date of filing: 21.12.2012
(51) Int. Cl.: C09D 7/12, C09D 201/00, C09D 5/00

(54) **FILM FORMATION WITH CALCITE**
FILMBILDUNG MIT CALCIT
FORMATION DE FILM AVEC DE LA CALCITE

(30) Priority: 22.12.2011 US 201161579380 P
(43) Date of publication of application: 29.10.2014
(73) Proprietor: Retec F3 Technologies, Sec., Granby, Quebec J2J 1A4 (CA)
(72) Inventor: DANDENAULT, François, Granby, Québec J2J 1A4 (CA); BAGHDAD DAIDJ, Djamel, Granby, Québec J2H 2V1 (CA); BÉRUBÉ, Serge, L'Assomption, Québec J5W 3N6 (CA); PARANDOOSH, Shoreh, Mont St-Hilaire, Québec J3H 3X1 (CA)
(74) Representative: Cabinet Plasseraud
(86) International application number: PCT/CA2012/050934
(87) International publication number: WO 2013/091111

(56) References cited:
- CA-A1- 2 322 782
- CA-A1- 2 707 865
- CA-A1- 2 739 987
- CA-A1- 2 764 378
- US-A- 4 454 261

## Description

### TECHNICAL FIELD

It is provided a composition, methods, and systems for formation of a continuous and cohesive film which an be coated on a cellulose based material or a plastic based material. Suitable inorganically filled mixtures with organic polymer binder, combined with natural fibers or polymers and protein in correct proportions in order to form an article which has the desired performance criteria. The film is characterized in that it provides water, grease and oil resistance with optimum water vapour barrier and can be used for wax replacement applied as a top coat for flexible packaging. This film is formed at a very fast set speed without the need of thermal energy. The composition contains i) a filler containing calcite, and ii) a binder.

### BACKGROUND ART

Water based barrier coatings when applied to paper and paperboard contain water that has to be removed to form a continuous film. The quality of the film, free of defects, is very important to achieve the optimal barrier properties.

US,A,4 454,261 discloses a clear film comprising polycarbonate reins and calcite.

CA,A,2 739 987 discloses coated paper or paperboard comprising multilayer coating. A drying process normally removes water. The drying process is usually a thermal one (conduction, convection, radiation) in which heat is provided to the liquid to vaporize the water.

The drying condition is one of the most important factors that affect the coating performance. Quality problems such as bubbles, blisters, pinholes or cracks can occur with improper drying conditions. The production conditions must be adapted to the type of machine, coating used and the coat weight.

The cost of the drying represents a major part of the process cost, and as energy costs rise, drying efficiency becomes increasingly important.

Thus, in a time of concern over energy environment and petroleum resources, it would be beneficial to be able to coat paper and/or plastic surfaces using water based barrier coating without the need of heat or dryer while still having a high rate of speed of coating, allowing for the production of highly filled material having greater flexibility, tensile strength, toughness, malleability and mass-productability.

### SUMMARY

In one aspect, it is provided a composition which, when mixed with a polymer composition, allows for the formation of a continuous and cohesive film. The film is characterized in that it provides water, grease and oil resistance, provides a water vapour barrier and can used as wax replacement treatment and a top coat for flexible packaging, but also on other substrates. This film is formed at a very fast set speed without the need of thermal energy.

It is further provided a water-based polymeric composition as defined in claim 1 comprising i) calcite alone or in combination with a salt of one or more of myristic, palmitic and stearic acid; ii) a C₉-C₁₈ fatty acid complex of a metal ion, the metal ion having an oxidation state of at least 3; and iii) a polymeric composition comprising a polymer, copolymer, or a mixture of polymers or copolymers.

In another aspect, it is provided a process for providing water, vapour, oil and grease resistance to a material comprising combining a) calcite alone or in combination with a salt of one or more of myristic, palmitic and stearic acid; and b) a polymeric composition comprising a polymer, copolymer, mixtures of polymers or copolymers and allowing a film to form on the material at a temperature less than 50°C. Accordingly, a) can comprise 20 to 40% by weight and b) comprises 80 to 60% by weight. The process as defined by claim 2 comprise combining a) and b) with c) a C₉-C₁₈ fatty acid complex of a metal ion, the metal ion having an oxidation state of at least 3.

A tackifier resin d), the the presence of an aqueous solvent, can be combined in the process. It is also provided a process for providing water, vapour, oil and grease resistance to a material comprising combining a) calcite alone or in combination with a salt of one or more of myristic, palmitic and stearic acid; b) a polymeric composition comprising a polymer, a copolymer, or mixtures of polymers or copolymers; and c) a tackifier resin, in the presence of an aqueous solvent, to form a water-based film-forming composition; coating a surface of the material with said water-based film-forming composition; and allowing a film of said polymeric composition to form at a temperature less than 50°C.

In an embodiment, the salt in a) is calcium stearate and the metal ion in c) is chromium ion.

In an alternate aspect, it is provided a process for providing water, vapour, oil and grease resistance to a material comprising a) combining i) calcite alone or in combination with a salt of one or more of myristic, palmitic and stearic acid; ii) a C₉-C₁₈ fatty acid complex of a metal ion, the metal ion having an oxidation state of at least 3; and iii) a polymeric composition comprising a polymer, copolymer, or a mixture of polymers or copolymers and b) allowing a film to form without added thermal or microwave energy.

In an embodiment, the calcite is from a natural material.

In a further embodiment, the natural material is a mineral-derived material or a biological material.

In another embodiment, the mineral-derived material is limestone or a sedimentary rock.

In a further embodiment, the natural material is at least one of egg shell, seashell, red algae, sponge, brachiopod, echinoderm, bryozoa, and shell of bivalve.

In another embodiment, the seashell is from oysters, lobsters, scallops, Japanese littlenecks, turban shells, fresh water clams, or abalones.

In yet another embodiment, the salt of one or more of myristic, palmitic and stearic acid is selected from the group consisting of calcium stearate and zinc stearate.

In a supplemental embodiment, the polymeric composition comprises a polymer, copolymer or a mixture of polymers or copolymers selected from the group consisting of styrene butadiene copolymers, modified styrene butadiene copolymers, styrene/acrylate copolymers, carboxylated polystyrene, acrylic/polyacrylic polymers, polyvinyl acetate; polypolyvinyl alcohol, polyvinylacetate-ethylene, polyvinyl acrylic; corn zein, starch, and polyvinylidene chloride.

In yet another, it is provided a substrate having a surface coated with a film formed from the polymeric composition described herein.

It is also provided a material comprising a substrate comprising the composition as described herein.

It is further provided a process for coating a surface comprising the use of a water-based polymeric composition without the use of thermal energy or microwave energy. Thus, it is provided a material comprising a substrate having a surface with a film coating formed by coating the surface with the film forming composition as described herein.

In an embodiment, the substrate is selected from a cellulose based material or a plastic or polymer based material.

In an embodiment, the material is paper, cardboard, wood, paperboard, medium liner or kraft paper.

In another embodiment, the material is a plastic injected mold, tube, film, fibre, tissue, mastic, plastic coating, extrusion present in cellulose support, or wrapping package.

In a further embodiment, the plastic based material is from vinyl, polyterephthalate, polypropylene (PP), polystyrene (PS), high impact polystyrene (HIPS), acrylonitrile butadiene styrene (ABS), polyethylene terephthalate (PET), polyester (PES), polyamides (PA) (Nylons), poly(vinyl chloride) (PVC), polyurethanes (PU), polycarbonate (PC), polyethylene (PE), high-density polyethylene (HDPE), low-density polyethylene (LDPE), polymethyl methacrylate (PMMA), acrylic styrene acrylonitrile (ASA), acrylic, acrylonitrile-butadiene styrene (ABS), melamine, formaldehyde urea, phenolic resin, polybutylene, polyphenyl oxide or phenoplast (PF).

The description provides, in one embodiment, a coated sheet material that is readily biodegradable, as well as recyclable and repulpable because of the classes of ingredient employed. The present description provides coated sheet material, such as cellulose-based materials including kraft paper, that is resistant to penetration by grease and oil, and that is also resistant to penetration by water moisture. Accordingly, embodiments of the present description relate to containers and packaging for foodstuff, for frozen foods, as ovenable containers, as food wrappers, as receptacles, and as storage containers.

In a further embodiment, there is provided a composition i) and iii) above for forming a film coating in accordance with the disclosure herein.

### DETAILED DESCRIPTION

The present description relates to a water based wax-free coating which forms a film at a very fast rate without the need for added heat. It provides excellent water resistance (tack free), grease and oil resistance and good water vapour barrier properties.

It is provided a composition, methods, and systems for formation of a continuous and cohesive film. Suitable inorganically filled mixtures with organic polymer binder, combined with natural fibers or polymers and protein in correct proportions in order to form an article which has the desired performance criteria. The film is characterized in that it provides water, grease and oil resistance and all family of hydrocarbon from the molecular weight range of up to 10,000 dalton with optimum water vapour barrier and can be used for wax replacement with the molecular weight range applied as a top coat for flexible packaging. This film is formed at a very fast set speed without the need of thermal energy. The composition contains i) a filler containing calcite, and ii) a binder.

More particularly, it is provided compositions and methods for manufacturing packaging articles having highly inorganically filled components.

The article having such a matrix can vary greatly in thickness, stiffness, flexibility, toughness, strength with optimum adhesion strength for optimum packaging properties. This technology is economic and more environmentally friendly than existing technology in the barrier coating industry.

The success of functional coatings generally depends on having a uniform coating. A continuous film, free of defect, is particularly important for barrier properties. Film formation in coating involves the change from liquid to solid state. This is done by the evaporation of the water and coalescence of the particles of the dispersion. The polymer is initially present as discrete spheres separated by a continuous water phase. The water is removed by evaporation and by penetration into the porous substrate. As the concentration increase, the polymer particles move closer together. In this particular case, water is absorbed so fast by the substrate, that the spheres or particles are forced into ever-closer contact.

Eventually, the spheres become crowded so tightly, that the space between them creates capillary forces. As close packing occurs, the capillary force of the water draws the spheres or particles together to form a continuous and cohesive film.

The ease of film formation depends on the glass transition temperature, commonly known as Tg, of the polymer, the particle size, the formulation ingredients and the temperature reached during the drying process.

The composition and method described herein allows for the manufacture of highly inorganically filled composition, which can be described as a formed film barrier, by carefully incorporating a variety of different materials rich in calcite such as sea shells, egg shell, proteins and fibers capable of imparting discrete yet synergistically related properties. Thus, it is provided a unique class or range of micro-composition having remarkable properties of strength, toughness, flexibility, environmental soundness, mass producibility and low cost.

Most egg-laying amniotes produce eggshell calcium carbonate in the form of calcite (CaCO₃). Calcite is a carbonate mineral and the most stable polymorph of calcium carbonate. Examples of natural materials comprising calcite include mineral-derived materials and biological materials. Examples of mineral-derived calcite-containing materials include limestone and sedimentary rocks. Examples of biological calcite-containing materials include egg shells, seashells, the hard parts of red algae, sponges, brachiopods, echinoderms, bryozoa, and parts of the shells of some bivalves such as oysters and rudist. As the naturally occurring calcite-containing materials, biological calcite-containing materials are preferred from a viewpoint of easy availability. In particular, egg shells, seashells and echinoderm shells are more preferably used from a viewpoint that industrial waste can be effectively utilized. Egg shells are particularly preferred because they can easily be crushed in a predetermined particle size. Types of shellfish for obtaining a seashell, recited as an example and not limited to, include oysters, lobsters, scallops, Japanese littlenecks, turban shells, fresh water clams, and abalones from a viewpoint of easy availability. Types of echinoderms are not particularly limited and examples thereof include sea urchins.

A calcite-containing material can be prepared in a predetermined particle size range and/or particle size distribution in advance by means known to those skilled in the art before treatment with an acid.

The article may contain from as low as inorganically 5% to as high as 40% inorganic (by weight of the total solids contents) dispersed within an organic polymer binder matrix, therefore forming a highly inorganically filled organic polymer matrix.

Particularly, the compositon described herein comprises a filler as described herein in combination with a metal salt, a fatty acid complex of a metal ion having an oxidation state of at least 3 as decribed in Canadian patent application publication no. 2,707,865. It is disclosed herein that the composition described herein, in combination with calcite, can comprise a salt, such as calcium stearate, which influences the rate of film formation. Salts, such as calcium stearate, acts as a coalescent agent by reducing the minimum film forming temperature. Also, the salt, such as calcium stearate acts as an emulsifier and reduces the surface tension of the mixture; this allows the coating to wet the surface thoroughly and the water present in the coating is rapidly removed by penetration into the porous paper substrate or plastic material.

Fibers which may be incorporated into the inorganically filled matrix preferably include naturally occurring organic fibers extracted from hemp, cotton, plant leaves, and wood.

The presence of the fatty acid complex of a metal ion, such as chromium, enhances the rate of the film formation at the same time helping to get a better film property including release, water repellency, water, water vapour, grease and oil resistance.

Therefore the water based barrier coating as described herein rapidly forms a continuous and cohesive film free of defects, without the need for heat. The fast set drying film formation concept of this novel water based barrier coating composition allows barrier coating technology to extend the application to the non conventional equipment such as size press coaters, spray coaters, curtain coaters and flexo where the thermal source are deficient or absent.

The coated surface encompassed herein can be a cellulose-based surface comprising a film formed from the film-forming composition of the invention. It is also encompass a plastic surface comprising a film formed from the polymeric film-forming composition of the invention. The surface of plastic can be of all kinds, independently of their chemical character, shape, etc. The plastic surface can be a plastic injected mold, tube, film, fibre, tissue, mastic, plastic coating, extrusion present in cellulose support, wrapping package such as vinyl, polyterephthalate, polypropylene (PP), polystyrene (PS), high impact polystyrene (HIPS), acrylonitrile butadiene styrene (ABS), polyethylene terephthalate (PET), polyester (PES), polyamides (PA) (Nylons), poly(vinyl chloride) (PVC), polyurethanes (PU), polycarbonate (PC), polyethylene (PE), high-density polyethylene (HDPE), low-density polyethylene (LDPE), polymethyl methacrylate (PMMA), acrylic styrene acrylonitrile (ASA), acrylic, acrylonitrile-butadiene styrene (ABS), melamine, formaldehyde urea, phenolic resin, polybutylene, polyphenyl oxide and/or phenoplast (PF).

Particularly, the plastic material as encompassed herein can comprise for example, at the end of the process, 10% calcite and 90% polypropylene, 10% calcite and 90% polyethylene, 35% calcite and 65% polyethylene. More particularly, the plastic material as encompassed herein can comprise for example, at the end of the process 40 to 50% of calcite.

The term polymeric film-forming composition herein is intended to mean a composition comprising i) calcite alone or in combination with a salt of one or more of myristic, palmitic and stearic acid; ii) a C₉-C₁₈ fatty acid complex of a metal ion, the metal ion having an oxidation state of at least 3; and iii) a polymeric composition comprising a polymer, copolymer, or a mixture of polymers or copolymers.

It has been found that air exposure to the polymeric film-forming composition described herein leads to film formation from the composition, such as a film forming on its surface. Accordingly, one embodiment relates to a pre-mixture comprising of no more than two of i) calcite alone or in combination with a salt of one or more of myristic, palmitic and stearic acid; ii) a C₉ - C₁₈ fatty acid complex of a metal ion, the metal ion having an oxidation state of at least 3; and iii) a polymeric composition comprising a polymer, copolymer, or a mixture of polymers or copolymers.

The salt of one or more of myristic, palmitic and stearic acid is a typically a dibasic metal salt of these acids, and may be selected from, for instance, sodium, potassium, calcium, and zinc salts; more precisely from sodium stearate, potassium stearate, calcium stearate, zinc stearate; sodium myristate, potassium myristate, calcium myristate, or zinc myristate; sodium palmitate, potassium palmitate, calcium palmitate, and zinc palmitate. The salts may be in the form of an emulsion, dispersion, or in a solvent-free state.

In a suitable embodiment, the salt of one or more of myristic, palmitic and stearic acid is a metal salt of stearic acid, namely a metal stearate. More typically, the metal stearate is a dibasic metal salt of stearic acid, such as sodium stearate, calcium stearate, lithium stearate, or zinc stearate.

Dispersions of calcium or zinc stearate are sold commercially under the trade marks Devflo 50LPH™, Devflo 50C™ and Devflo 40 RZ1™. Commercial stearate dispersions or emulsions, such as those from BASF®, Rohm & Haas® and others suppliers are also highly suitable.

The C₉-C₁₈ fatty acid complex of a metal ion, the metal ion having an oxidation state of at least 3, is a preferred component of the catalyst composition and of the polymeric film-forming composition. Other suitable release coating materials include, for example, iron(+3)-fatty acid complexes and titanium(+4)-fatty acid complexes. Good results have been achieved with trivalent metal complexes of fatty acids, such as those mentioned above. Accordingly, the C₉-C₁₈ fatty acid complex of a metal ion, the metal ion having an oxidation state of at least 3, may be selected from a Werner complex, a trivalent metal complex of a C₉-C₁₈ fatty acid, a tetravalent metal complex of a C₉-C₁₈ fatty acid, such as chrome-C₉-C₁₈-fatty acid complexes, iron(+3)-C₉-C₁₈ fatty acid complexes, or titanium(+4)-C₉-C₁₈-fatty acid complexes. The C₉-C₁₈ fatty acid complex of a metal ion, the metal ion having an oxidation state of at least +3, may, in certain embodiments have the following structure: 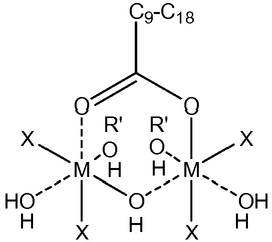 wherein M is the metal of the metal ion, R' is the solvent within which the metal complex is dispersed or emulsified, and X is a halogen, such as chlorine.

The metal ion is suitably chromium, such as in chromimium pentahydroxy( tetradecanoato) di-, tetradecanoato chromic chloride hydroxide, and octadecanoato chromic acid hydroxide.

C₁₁-C₁₈ fatty acid complexes of a metal ion having an oxidation stable of at least 3, such as chromium, have been found expressly suitable.

The C₉-C₁₈ fatty acid complex of a metal ion, the metal ion having an oxidation state of at least 3 may be in the form of a dispersion, suspension, emulsion, or solution in a suitable solvent. The solvent may be water, an alcohol, water-miscible organic solvents, alcohol-miscible organic solvents, and combinations thereof. Suitable alcohols include methanol, ethanol, proponol, isopropanol, butanol, pentanol, hexanol, heptanol, and cyclohexanol. Suitable water- or alcohol-miscible organic solvents include acetonitrile, ethyl acetate, pentane, hexane, heptane and petroleum ether.

An important aspect of the disclosure relates to the use of calcite alone or in combination with a salt of one or more of myristic, palmitic and stearic acid; and a C₉ - C₁₈ fatty acid complex of a metal ion, the metal ion having an oxidation state of at least 3 for the preparation of a film on a surface. These components can be added individually or as a mixture, such as in the form of a dispersion, suspension, emulsion, or solution.

Another embodiment relates to a water-based mixture of calcite alone or in combination with a salt of one or more of myristic, palmitic and stearic acid; and a C₉-C₁₈ fatty acid complex of a metal ion, the metal ion having an oxidation state of at least 3. The catalytic composition may be in the form of a dispersion, suspension, emulsion, or solution. An advantage of the present disclosure is that the catalytic composition may be water-based and still provide the fast-film formation on the surface. The term water-based mixture is intended to mean a dispersion, suspension, emulsion, or solution wherein at least 30% (v/v) of the solvent is water, such as at least 40%, more typically at least 50%.

In a highly suitable embodiment of the water-based mixture of calcite alone or in combination with a salt of one or more of myristic, palmitic and stearic acid; and a C₉-C₁₈ fatty acid complex of a metal ion, the metal ion having an oxidation state of at least 3, the salt of one or more of myristic, palmitic and stearic acid is selected from the group consisting of calcium stearate and zinc stearate.

In a further highly suitable embodiment of the water-based mixture of calcite alone or in combination with a salt of one or more of myristic, palmitic and stearic acid; and a C₉-C₁₈ fatty acid complex of a metal ion, the metal ion having an oxidation state of at least 3, the C₉-C₁₈ fatty acid complex of a metal ion is a chrome- C₉-C₁₈ fatty acid complex.

The ratio of i) calcite alone or in combination with a salt of one or more of myristic, palmitic and stearic acid to ii) a C₉-C₁₈ fatty acid complex of a metal ion in the water-based catalytic composition of the invention will vary depending on the nature of the polymer composition with which the catalytic composition will eventually be mixed, and with the nature of the surface to be covered.

The catalytic composition may comprise a solvent-free combination of i) calcite alone or in combination with the salt of one or more of myristic, palmitic and stearic acid and ii) a C₉-C₁₈ fatty acid complex of a metal ion. Alternatively, the catalytic composition may comprise a combination of i) calcite alone or in combination with the salt of one or more of myristic, palmitic and stearic acid and ii) a C₉-C₁₈ fatty acid complex of a metal ion dispersed, dissolved or suspended in the solvent within which the C₉-C₁₈ fatty acid complex of a metal ion was dispersed or suspended. In a further alternative, the catalytic composition may comprise a combination of i) calcite alone or in combination with the salt of one or more of myristic, palmitic and stearic acid and ii) a C₉-C₁₈ fatty acid complex of a metal ion may be dispersed, dissolved or suspended in water or an aqueous mixture, such aqueous mixture typically comprising water and the solvent or solvents within which each of i) calcite alone or in combination with the salt of one or more of myristic, palmitic and stearic acid and ii) the C₉-C₁₈ fatty acid complex of a metal ion were dispersed, dissolved or suspended.

The catalytic composition described herein can be combined with iii) a polymeric composition comprising a polymer, copolymer, or a mixture of polymers or copolymers to form a polymeric film-forming composition. Accordingly, a further aspect relates to a polymeric film-forming composition comprising i) calcite alone or in combination with a salt of one or more of myristic, palmitic and stearic acid; ii) a C₉-C₁₈ fatty acid complex of a metal ion, the metal ion having an oxidation state of at least 3; and iii) a polymeric composition comprising a polymer, copolymer, mixtures of polymers or copolymers. In a typical embodiment, the polymeric film-forming composition is a water-based polymeric film-forming composition.

The polymer, copolymer, or mixtures of polymers or copolymers, are typically water dispersible polymers, or copolymer and are film-forming polymers or copolymers. In the preferred embodiment, the water dispersible film forming polymers or copolymers have a Glass Transition Temperature of from -60 to 105 °C, and are suitably selected to form a non-blocking film.

Polymers that may be used as cross-linkable polymers resistant to water moisture in the barrier coating composition include but are not limited to: polymers and copolymers of poly(dienes) such as poly(butadiene), poly(isoprene), and poly(1-penetenylene);
- poly(acrylics) such as poly(benzyl acrylate), poly(butyl acrylate) (s), poly(2-cyanobutyl acrylate), poly(2-ethoxyethyl acrylate), poly(ethyl acrylate), poly(2-ethylhexyl acrylate), poly(fluoromethyl acrylate), poly(5,5,6,6,7,7,7-heptafluoro-3-oxaheptyl acrylate), poly(heptafluoro-2-propyl acrylate), poly(heptyl acrylate), poly(hexyl acrylate), poly(isobornyl acrylate), poly(isopropyl acrylate), poly(3-methoxybutyl acrylate), poly(methyl acrylate), poly(nonyl acrylate), poly(octyl acrylate), poly(propyl acrylate), and poly(p-tolyl acrylate);
- polyvinylacrylates, fluorocarbons and fluoropolymers;
- poly(acrylamides) such as poly(acrylamide), poly(N-butylacrylamide), poly(N,N-dibutylacrylamide), poly(N-dodecylacrylamide), and poly(morpholylacrylamide);
- poly(methacrylic acids) and poly(methacrylic acid esters) such as poly(benzyl methacrylate), poly(octyl methacrylate), poly(butyl methacrylate), poly(2-chloroethyl methacrylate), poly(2-cyanoethyl methacrylate), poly(dodecyl methacrylate), poly(2-ethylhexyl methacrylate), poly(ethyl methacrylate), poly(1,1,1-trifluoro-2-propyl methacrylate), poly(hexyl methacrylate), poly(2-hydroxyethyl methacrylate), poly(2-hydropropyl methacrylate), poly(isopropyl methacrylate), poly(methacrylic acid), poly(methyl methacrylate) in various forms such as, atactic, isotactic, syndiotactic, and heterotactic; and poly(propyl methacrylate);
- poly(methacrylamides) such as poly(4-carboxy phenylmethacrylamide);
- other alpha-and beta-substituted poly(acrylics) and poly(methacrylics) such as poly(butyl chloracrylate), poly(ethyl ethoxycarbonylmethacrylate), poly(methyl fluoroacrylate), and poly(methyl phenylacrylate);
- poly(vinyl ethers) such as poly(butoxyethylene), poly(ethoxyethylene), poly(ethylthioethylene),
- (dodecafluorobutoxyethylene), poly poly(2,2,2-trifluoroethoxytrifluoroethylene), poly(hexyloxyethylene), poly(methoxyethylene), and poly(2-methoxypropylene);
- poly(vinyl halides) and poly(vinyl nitriles) such as poly(acrylonitrile), poly(1,1-dichloroethylene), poly(chlorotrifluoroethylene), poly(1,1-dichloro-2-fluoroethylene), poly(1,1-difluoroethylene), poly(methacrylonitrile), poly(vinyl chloride), and poly(vinylidene chloride);
- poly(vinyl esters) such as poly(vinyl acetate), poly(benzoyloxyethylene), poly(4-butyryloxybenzoyloxyethylene), poly(4-ethylbenzoyloxyethylene), poly[(trifluoroacetoxy)ethylene], poly[(heptafluorobutyryloxy)ethylene], poly(formyloxyethylene), poly[(2-methoxybenzoyloxy)ethylene], poly(pivaloyloxyethylene), and poly(propionyloxyethylene);
- poly(styrenes) such as, poly(4-acetylstyrene), poly[3-(4-biphenylyl)styrene], poly(4-[(2-butoxyethoxy) methyl]styrene), poly(4-butoxymethyl styrene), poly(4-butoxystyrene), poly(4-butylstyrene), poly(4-chloro-2-methylstyrene), poly(2-chlorostyrene), poly(2,4-dichlorostyrene), poly(2-ethoxymethyl styrene), poly(4-ethoxystyrene), poly(3-ethylstyrene), poly(4-fluorostyrene), poly(perfluorostyrene), poly(4-hexylstyrene), poly [4-(2-hydroxyethoxymethyl)styrene], poly [4-(1-hydroxy-1-methylpropyl)styrene], poly(2-methoxymethylstyrene), poly(2-methoxystyrene), poly(alpha-methylstyrene), poly(2-methylstyrene), poly(4-methoxystyrene), poly(4-octanoylstyrene), poly(4-phenoxystyrene), poly(4-phenylstyrene), poly(4-propoxystyrene), and poly(styrene);
- poly(oxides) such as poly(ethylene oxides), poly(tetrahydrofuran), poly(oxetanes), poly(oxybutadiene), poly[oxychloromethyl)ethylene], poly(oxy-2-hydroxytrimethyleneoxy-1,4-phenylenemethylene-1, 4-phenylene), poly(oxy-2,6-dimethoxy-1,4-phenylene), and poly(oxy-1,3-phenylene);
- poly(carbonates) such as polycarbonate of Bisphenol A, and poly[oxycarbonyloxy-4,6-dimethyl]-1,2-phenylenemethylene-3,5-dimethyl-1,2-phenylene];
- poly(esters) such as poly(ethylene terephthalate), poly[(1,2-diethoxycarbonyl)ethylene], poly[(1,2-dimethoxycarbonyl)ethylene], poly(oxy-2-butenyleneoxysebacoyl), poly[di(oxyethylene)oxyadipoyl], poly(oxyethyleneoxycarbonyl-1,4-cyclohexylenecarbonyl), poly(oxyethyleneoxyisophthaloyl), poly[di(oxyethylene)oxyoxalyl], poly[di(oxyethylene)oxysuccinyl], poly(oxyethyleneoxyterephthaloyl), poly(oxy-1,4-phenyleneisopropyiidene-1,4-phenylene oxysebacoyl), and poly(oxy-1,3-phenyleneoxyisophthaloyl);
- poly(anhydrides) such as poly(oxycarbonyl-1,4-phenylenemethylene-1,4-phenyl enecarbonyl), and poly(oxyisophthaloyl);
- poly(urethanes) such as poly(oxycarbonyliminohexamethyleneiminocarbonyloxydecamethylene), poly(oxyethyleneoxycarbonyliminiohexamethyleneiminocarbonyl), poly(oxyethyleneoxycarbonylimino-1,4-phenylenetrimethylene-1,4-phenyleneiminocarbonyl), poly(oxydodecamethyleneoxycarbonyliminodecamethyleneiminocarbonyl), and poly(oxytetramethyleneoxycarbonylimino-1,4-phenylenemethylene-1,4-phenyleneiminocarbonyl);
- poly(siloxanes) such as, poly(dimethylsiloxane), poly[oxy(methyl)phenylsilylene], and poly(oxydiphenylsilylene-1,3-phenylene);
- poly(sulfones) and poly(sulfonamides) such as poly[oxycarbonyl di(oxy-1,4-phenylene)sulfonyl-1, 4-phenyleneoxy-1,4-phenylene], poly[oxy-1,4-phenylenesulfinyl-1,4-phenyleneoxy-1, 4-phenylenecarbonyl-1,4-phenylene), poly(oxy-1,4-phenylenesulfonyl-1,4-phenylene), and poly(sulfonyl-1,3-cyclohexylene);
- poly(amides) such as nylon-6, nylon-6,6, nylon-3, nylon-4,6, nylon-5,6, nylon-6,3, nylon-6,2, nylon-6,12, and nylon-12;
- poly(imines) such as poly(acetyliminoethylene), and poly(valeryl iminoethylene);
- poly(benzimidazoles) such as poly(2,6-benzimidazolediyl-6,2-benzimidazolediyloctamethylene);
- carbohydrates such as amylose triacetate, cellulose triacetate, cellulose tridecanoate, ethyl cellulose, and methylcellulose;
- and polymer mixtures and copolymers thereof such as poly(acrylonitrile-co-styrene) with poly(e-caprolactone), or poly(ethyl methacrylate), or poly(methyl methacrylate);
- Poly (acrylonitrile-co-vinylidene chloride) with poly(hexamethylene terephthalate);
- Poly (allyl alcohol-co-styrene) with poly(butylene adipate), or poly(butylene sebacate); poly(n-amyl methacrylate) with poly(vinyl chloride);
- bisphenol A polycarbonate with poly(e-caprolactone), or poly(ethylene adipate), or poly(ethylene terephthalate), or novolac resin;
- poly(butadiene) with poly(isoprene);
- poly(butadiene-co-styrene) with glycerol ester of hydrogenated rosin;
- poly(butyl acrylate) with poly(chlorinated ethylene), or poly(vinyl chloride);
- poly(butyl acrylate-co-methyl methacrylate) with poly(vinyl chloride);
- poly(butyl methacrylate) with poly(vinyl chloride);
- poly(butylene terephthalate) with poly(ethylene terephthalate), or poly(vinyl acetate-co-vinylidene chloride);
- poly(e-caprolactone) with poly(chlorostyrene), or poly(vinyl acetate-co-vinylidene chloride);
- cellulose acetate with poly(vinylidene chloride-co-styrene);
- cellulose acetate-butyrate with poly(ethylene-co-vinyl acetate);
- poly(chlorinated ethylene) with poly(methyl methacrylate);
- poly(chlorinated vinyl chloride) with poly(n-butyl methacrylate), or poly(ethyl methacrylate), or poly(valerolactone);
- poly(chloroprene) with poly(ethylene-co-methyl acrylate);
- poly(2,6-dimethyl-1,4-phenylene oxide) with poly(a-methylstyrene-co-styrene styrene), or poly(styrene);
- poly(ethyl acrylate) with poly(vinyl chloride-co-vinylidene chloride), or poly(vinyl chloride);
- poly(ethyl methacrylate) with poly(vinyl chloride);
- poly(ethylene oxide) with poly(methyl methacrylate);
- poly(styrene) with poly(vinyl methyl ether); and
- poly(valerolactone) with poly(vinyl acetate-co-vinylidene chloride).

The water dispersible film-forming are typically selected from the group comprising:
- Styrene butadiene copolymers, typically in a dispersion;
- Modified styrene butadiene copolymers, typically in a dispersion;
- Styrene / acrylate copolymers, typically in a dispersion:
- Carboxylated polystyrene, typically in a dispersion:
- Acrylic / polyacrylic polymers, typically in a emulsion
- Polyvinyl Acetate;
- Polypolyvinyl alcohol,
- Polyvinylacetate-ethylene,
- Polyvinyl acrylic;
- Corn Zein (protein) or starch, typically in a dispersion;
- Rosin ester dispersions, and
- Polyvinylidene chloride.
- Dispersion of biopolymers and their derivatives

Encompassed biopolymers are of animal origin such as biodegradable polyolefin or petrochemical aliphatic polyester. Also encompassed are biopolymer for removable sources such as polysaccharides like cellulose, amidon, chitin and chitosan, proteins, vegetable oil, bacterial polymers, polyhydroxyalkanoates (PHAs), and polylactic acid or prolactide (PLA).

The term absence of thermal energy, or the need for added thermal energy is intended to mean that a heater, oven or other direct heating device is not required in the film-forming process of the invention. The process occurs without direct heating. Otherwise stated, the film-forming process occurs at a temperature from 0 to 50°C, typically from 10 to 45°C, such as 15 to 40°C, typically at ambient temperature between 15 to 35 °C.

The catalytic composition allows for the water-based polymeric composition to form a film at a first rate without added heat. The catalytic composition allows for the water-based polymeric composition to form a film without added heat with the film-formation in less than one minute from application of the composition to the surface. The catalytic composition allows for the water-based polymeric composition to form a film without added heat and without the use of wax. The terms wax free composition, free of wax, without wax is intended to mean a polymeric composition, and resultant film with less than 0.1 % wax, typically with 0% wax.

The film-forming polymeric composition described herein may optionally comprise a tackifier resin, such as an aqueous dispersion of glycerol ester of hydrogenated rosin.

The film-forming polymeric composition may further optionally comprise a dispersing agent, a thickener agent, a defoaming agent, a slip agent, an antiskid agent, rheology modifiers, pigments, susceptor materials, crosslinking agents, catalysts, flame retardants, biocides, and wetting agent.

Pigment may be added to the film-forming composition to give the surface of the coated substrate or sheet material a desired appearance. For example, it may be desired that a food-contacting surface of the coated sheet material be a white color. In the event brown kraft paper is used as the substrate sheet material, titanium dioxide may be added to the barrier coating composition to make it white and to make the food-contacting surface of the sheet material white when the barrier coating composition is applied. Pigments such as TI-PURE® 900, a titanium dioxide pigment made by DuPont, are suitable pigments for the barrier coating. Other pigments such as clay, mica, talc, calcium carbonate or dispersions may be suitable so long as they do not significantly degrade the performance of the barrier coating composition.

A dispersing agent may be added to the film-forming composition to help disperse and suspend any component, including fillers and pigment particles, in the composition before application, and to stabilize the suspension. Any of a variety of dispersing agents may be used. For example, dispersing agents such as tetra sodium pyrophosphate ("TSPP") and sodium hexa meta phosphate are suitable for this purpose. It may be desirable to add a minor amount of fine metal powder or flakes, such as aluminum powder or flakes, to the barrier coating composition or release coating composition as a susceptor material.

The film-forming composition described is applied, without the need for added thermal energy, in the form of a solution, dispersion, emulsion, suspension, or in a solvent-free form to the surface of a material for film-formation. The material may be cellulose-based, metallic, textile, cement, sand, stone or glass. Cellulose-based materials include paper, cardboard, wood of all sorts, including paperboard, kraft paper and medium liner. Some of the numerous uses include use in frozen-foods, food packaging, paper for baking, corrugated paperboard, cardboard boxes, wrapping materials for consumable and non-consumable goods, such as hamburgers and sandwiches, such as in fast-food outlets. Metallic surfaces, such as pans, pots and baking trays, each comprising a film prepared from a film-forming composition of the invention, are also anticipated. Furniture and wood-based building materials, each comprising a film prepared from a film-forming composition of the invention, are also anticipated. Cement, outdoor tiling, and pavement, each comprising a film prepared from a film-forming composition of the invention, are also anticipated.

The film-forming composition described herein containing calcite is applied, without the need for added thermal energy, in the form of a solution, dispersion, emulsion, suspension, or in a solvent-free form to the surface of a material for film-formation. The material may be cellulose-based and/or plastic. Cellulose-based materials include paper, card, wood of all sorts, including paperboard, kraft paper. Some of the numerous uses include use in frozen-foods, food packaging, paper for baking, corrugated paperboard, cardboard boxes, wrapping materials for consumable and non-consumable goods, such as hamburgers and sandwiches, such as in fast-food outlets. Plastic materials include a plastic injected mold, tube, film, fibre, tissue, mastic, plastic coating, extrusion present in cellulose support, wrapping package such as vinyl, polyterephthalate, polypropylene (PP), polystyrene (PS), high impact polystyrene (HIPS), acrylonitrile butadiene styrene (ABS), polyethylene terephthalate (PET), polyester (PES), polyamides (PA) (Nylons), poly(vinyl chloride) (PVC), polyurethanes (PU), polycarbonate (PC), polyethylene (PE), polyterephthalate, polystyrene, high-density polyethylene (HDPE), low-density polyethylene (LDPE), polymethyl methacrylate (PMMA), acrylic styrene acrylonitrile (ASA), acrylic, acrylonitrile-butadiene styrene (ABS), melamine, formaldehyde urea, phenolic resin, polybutylene, polyphenyl oxide and/or phenoplast (PF).

Wherein the process according to claim 11, said salt in a) can be calcium stearate and said metal ion in c) is chromium ion.

The invention also relates to a process for providing water, vapour, oil and grease resistance to a material comprising
a) combining i) calcite alone or in combination with a salt of one or more of myristic, palmitic and stearic acid; ii) a C₉-C₁₈ fatty acid complex of a metal ion, said metal ion having an oxidation state of at least 3; and iii) a polymeric composition comprising a polymer, copolymer, or a mixture of polymers or copolymers and
b) allowing a film to form without added thermal or microwave energy.

While the invention has been described in connection with specific embodiments thereof, it will be understood that it is capable of further modifications and this application is intended to cover any variations, uses, or adaptations of the invention, as may be applied to the essential features hereinbefore set forth, and as follows in the scope of the appended claims.

## Claims

1. A water resistant film forming composition comprising:
a) calcite alone or in combination with a salt of one or more of myristic, palmitic and stearic acid;
b) a C₉-C₁₈ fatty acid complex of a metal ion, said metal ion having an oxidation state of at least 3; and
c) a polymeric composition comprising a polymer, copolymer, mixtures of polymers or copolymers.

2. A process for providing water, vapour, oil and grease resistance to a material comprising
I) combining a) calcite alone or in combination with a salt of one or more of myristic, palmitic and stearic acid; b) a polymeric composition comprising a polymer, copolymer, mixtures of polymers or copolymers; and c) a C₉-C₁₈ fatty acid complex of a metal ion, said metal ion having an oxidation state of at least 3; and
II) allowing a film to form on the material at a temperature less than 50°C.

3. The composition of claim 1 or the process of claim 2, wherein the calcite is from a natural material.

4. The composition or process of claim 3, wherein the natural material is a mineral-derived material or a biological material.

5. The composition or process of claim 4, wherein the mineral-derived material is limestone or a sedimentary rock.

6. The composition or process of claim 4 or 5, wherein the natural material is at least one of egg shell, seashell, red algae, sponge, brachiopod, echinoderm, bryozoa, and shell of bivalve.

7. The composition or process of claim 6, wherein the seashell is from oysters, lobsters, scallops, Japanese littlenecks, turban shells, fresh water clams, or abalones.

8. The composition of any one of claims 1-7, wherein the salt of one or more of myristic, palmitic and stearic acid is selected from the group consisting of calcium stearate and zinc stearate; or wherein the polymeric composition comprises a polymer, copolymer or a mixture of polymers or copolymers selected from the group consisting of styrene butadiene copolymers, modified styrene butadiene copolymers, styrene/acrylate copolymers, carboxylated polystyrene, acrylic/polyacrylic polymers, polyvinyl acetate, polypolyvinyl alcohol, polyvinylacetate-ethylene, polyvinyl acrylic, corn zein, starch, and polyvinylidene chloride.

9. The process of any one of claims 2-6, wherein the film is formed without added thermal or microwave energy.

10. The process of any one of claims 2-6 and 9, wherein in step I), a) comprises 20 to 40% by weight and b) comprises 80 to 60% by weight.

11. The process of any one of claims 2-6 and 9-10, wherein said salt in a) is calcium stearate and said metal ion in c) is chromium ion.

12. The process of any one of claims 2-6 and 9-11, further comprising combining d) a tackifier resin, in the presence of an aqueous solvent.

13. The process of any one of claims 2-6 and 9-12, wherein said material is a cellulose based material or a plastic-based material.

14. The process of any one of claims 2-6 and 9-13, wherein said material is paper, cardboard, wood, paperboard, medium liner, kraft paper, a plastic injected mold, tube, film, fibre, tissue, mastic, plastic coating, extrusion present in cellulose support, or wrapping package.

15. The process of claim 14, wherein said plastic based material is from vinyl, polyterephthalate, polypropylene (PP), polystyrene (PS), high impact polystyrene (HIPS), acrylonitrile butadiene styrene (ABS), polyethylene terephthalate (PET), polyester (PES), polyamides (PA) (Nylons), poly(vinyl chloride) (PVC), polyurethanes (PU), polycarbonate (PC), polyethylene (PE), high-density polyethylene (HDPE), low-density polyethylene (LDPE), polymethyl methacrylate (PMMA), acrylic styrene acrylonitrile (ASA), acrylic, acrylonitrile-butadiene styrene (ABS), melamine, formaldehyde urea, phenolic resin, polybutylene, polyphenyl oxide or phenoplast (PF).

## Patentansprüche

1. Wasserbeständige filmbildende Zusammensetzung umfassend:
a) Calcit allein oder in Kombination mit einem Salz von einem oder mehreren von Myristin-, Palmitin- und Stearinsäure;
b) einen C₉-C₁₈ Fettsäurekomplex eines Metallions, wobei das Metallion eine Oxidationsstufe von mindestens 3 hat; und
c) eine Polymerzusammensetzung umfassend ein Polymer, Copolymer, Mischungen von Polymeren oder Copolymeren.

2. Verfahren zur Ausstattung eines Materials mit Wasser-, Dampf-, Öl- und Fettbeständigkeit umfassend
I) Kombinieren von a) Calcit allein oder in Kombination mit einem Salz von einem oder mehreren von Myristin-, Palmitin- und Stearinsäure; b) einer Polymerzusammensetzung umfassend ein Polymer, Copolymer, Mischungen von Polymeren oder Copolymeren; und c) einem C₉-C₁₈ Fettsäurekomplex eines Metallions, wobei das Metallion eine Oxidationsstufe von mindestens 3 hat; und
II) Formen lassen eines Films auf dem Material bei einer Temperatur von weniger als 50 °C.

3. Zusammensetzung nach Anspruch 1 oder Verfahren nach Anspruch 2, wobei das Calcit aus einem natürlichen Material ist.

4. Zusammensetzung oder Verfahren nach Anspruch 3, wobei das natürliche Material ein aus Mineral gewonnenes Material oder ein biologisches Material ist.

5. Zusammensetzung oder Verfahren nach Anspruch 4, wobei das aus Mineral gewonnene Material Kalkstein oder ein Sedimentgestein ist.

6. Zusammensetzung oder Verfahren nach Anspruch 4 oder 5, wobei das natürliche Material mindestens eines von Eierschale, Muschelschale, Rotalgen, Schwamm, Armfüßer, Stachelhäuter, Moostierchen und zweischalige Muschel ist.

7. Zusammensetzung oder Verfahren nach Anspruch 6, wobei die Muschelschale von Austern, Hummer, Jakobsmuscheln, Japanischen Teppichmuscheln, Turbanschnecken, Süßwasservenusmuscheln oder Abalonen sind.

8. Zusammensetzung nach einem der Ansprüche 1-7, wobei das Salz von einem oder mehreren von Myristin-, Palmitin- und Stearinsäure ausgewählt ist aus der Gruppe bestehend aus Calciumstearat und Zinkstearat; oder wobei die Polymerzusammensetzung ein Polymer, Copolymer oder eine Mischung aus Polymeren oder Copolymeren ausgewählt aus der Gruppe bestehend aus Styrol-Butadien-Copolymeren, modifizierten Styrol-Butadien-Copolymeren, Styrol-/Acrylat-Copolymeren, carboxyliertem Polystyrol, Acryl-/Polyacrylpolymeren, Polyvinylacetat, Polypolyvinylalkohol, Polyvinylacetat-Ethylen, Polyvinylacryl, Maiszein, Stärke und Polyvinylidenchlorid umfasst.

9. Verfahren nach einem der Ansprüche 2-6, wobei der Film ohne die Zuführung von thermischer oder Mikrowellenenergie gebildet wird.

10. Verfahren nach einem der Ansprüche 2-6 und 9, wobei in Schritt I) a) 20 bis 40 Gew.-% umfasst und b) 80 bis 60 Gew.-% umfasst.

11. Verfahren nach einem der Ansprüche 2-6 und 9-10, wobei das Salz in a) Calciumstearat ist und das Metallion in c) Chromion ist.

12. Verfahren nach einem der Ansprüche 2-6 und 9-11, ferner umfassend das Kombinieren d) eines Klebrigmacherharzes in Anwesenheit eines wässrigen Lösungsmittels.

13. Verfahren nach einem der Ansprüche 2-6 und 9-12, wobei das Material ein Zellulose-basiertes Material oder ein Kunststoff-basiertes Material ist.

14. Verfahren nach einem der Ansprüche 2-6 und 9-13, wobei das Material Papier, Karton, Holz, Pappe, Medium Liner, Packpapier, eine spritzgegossene Kunststoffform, Schlauch, Film, Faser, Gewebe, Mastix, Kunststoffbeschichtung, in Zelluloseträger vorhandene Extrusion oder Wickelverpackung ist.

15. Verfahren nach Anspruch 14, wobei das Kunststoff-basierte Material aus Vinyl, Polyterephthalat, Polypropylen (PP), Polystyrol (PS), High Impact Polystyrol (HIPS), Acrylnitril-Butadien-Styrol (ABS), Polyethylenterephthalat (PET), Polyester (PES), Polyamiden (PA) (Nylons), Poly(vinylchlorid) (PVC), Polyurethanen (PU), Polycarbonat (PC), Polyethylen (PE), Polyethylen hoher Dichte (HDPE), Polyethylen niedriger Dichte (LDPE), Polymethylmethacrylat (PMMA), Acryl-Styrol-Acrylnitril (ASA), Acryl, Acrylnitril-Butadien-Styrol (ABS), Melamin, Formaldehyd-Harnstoff, Phenolharz, Polybutylen, Polyphenyloxid oder Phenoplast (PF) ist.

## Revendications

1. Composition filmogène résistante à l'eau comprenant :
a) de la calcite seule ou en association avec un sel d'un ou plusieurs parmi l'acide myristique, l'acide palmitique et l'acide stéarique ;
b) un complexe d'acide gras en C₉-C₁₈ d'un ion métallique, ledit ion métallique ayant un état d'oxydation d'au moins 3 ; et
c) une composition polymérique comprenant un polymère, un copolymère, des mélanges de polymères ou de copolymères.

2. Procédé conférant une résistance à l'eau, à la vapeur, à l'huile et à la graisse à un matériau comprenant
I) l'association de a) calcite seule ou en association avec un sel d'un ou plusieurs parmi l'acide myristique, l'acide palmitique et l'acide stéarique ; b) une composition polymérique comprenant un polymère, un copolymère, des mélanges de polymères ou de copolymères ; et c) un complexe d'acide gras en C₉-C₁₈ d'un ion métallique, ledit ion métallique ayant un état d'oxydation d'au moins 3 ; et
II) permission de la formation d'un film sur le matériau à une température inférieure à 50 °C.

3. Composition selon la revendication 1 ou procédé selon la revendication 2, dans lesquels la calcite est issue d'un matériau naturel.

4. Composition ou procédé selon la revendication 3, dans lesquels le matériau naturel est un matériau dérivé d'un minéral ou un matériau biologique.

5. Composition ou procédé selon la revendication 4, dans lesquels le matériau dérivé d'un minéral est un calcaire ou une roche sédimentaire.

6. Composition ou procédé selon la revendication 4 ou 5, dans lesquels le matériau naturel est au moins l'un parmi une coquille d'oeuf, un coquillage, des algues rouges, une éponge, un brachiopode, un échinoderme, des bryozoaires et une coquille de bivalve.

7. Composition ou procédé selon la revendication 6, dans lesquels le coquillage provient d'huîtres, de homards, de pétoncles, de palourdes japonaises, de coquilles de turbo, de clams d'eau douce ou d'ormeaux.

8. Composition selon l'une quelconque des revendications 1 à 7, dans laquelle le sel d'un ou plusieurs parmi l'acide myristique, l'acide palmitique et l'acide stéarique est choisi dans le groupe constitué du stéarate de calcium et du stéarate de zinc ; ou dans laquelle la composition polymérique comprend un polymère, un copolymère ou un mélange de polymères ou de copolymères choisis dans le groupe constitué des copolymères de styrène et de butadiène, des copolymères de styrène et de butadiène modifiés, des copolymères de styrène/acrylate, du polystyrène carboxylé, des polymères d'acrylique/polyacrylique, de l'acétate de polyvinyle, du poly(alcool polyvinylique), du polyvinylacétate-éthylène, du polyvinyle acrylique, de la zéine de maïs, de l'amidon et du chlorure de polyvinylidène.

9. Procédé selon l'une quelconque des revendications 2 à 6, dans lequel le film est formé sans énergie thermique ou à microondes ajoutée.

10. Procédé selon l'une quelconque des revendications 2 à 6 et 9, dans lequel dans l'étape I), a) comprend de 20 à 40 % en poids et b) comprend de 80 à 60 % en poids.

11. Procédé selon l'une quelconque des revendications 2 à 6 et 9 à 10, dans lequel ledit sel dans a) est du stéarate de calcium et ledit ion métallique dans c) est un ion chrome.

12. Procédé selon l'une quelconque des revendications 2 à 6 et 9 à 11, comprenant en outre l'association de d) une résine poisseuse, en présence d'un solvant aqueux.

13. Procédé selon l'une quelconque des revendications 2 à 6 et 9 à 12, dans lequel ledit matériau est un matériau à base de cellulose ou un matériau à base de plastique.

14. Procédé selon l'une quelconque des revendications 2 à 6 et 9 à 13, dans lequel ledit matériau est du papier, du carton, du bois, du carton blanchi, une doublure intermédiaire, du papier kraft, un moule en plastique injecté, un tube, un film, une fibre, un tissu, un mastic, un revêtement en plastique, une extrusion présente dans un support en cellulose ou un paquet d'emballage.

15. Procédé selon la revendication 14, dans lequel ledit matériau à base de plastique est fabriqué à partir de vinyle, de polytéréphtalate, de polypropylène (PP), de polystyrène (PS), de polystyrène choc (HIPS), d'acrylonitrile butadiène styrène (ABS), de téréphtalate de polyéthylène (PET), de polyester (PES), de polyamides (PA) (Nylons), de poly(chlorure de vinyle) (PVC), de polyuréthanes (PU), de polycarbonate (PC), de polyéthylène (PE), de polyéthylène haute densité (HDPE), de polyéthylène basse densité (LDPE), de méthacrylate de polyméthyle (PMMA), d'acrylique styrène acrylonitrile (ASA), d'acrylique, d'acrylonitrile-butadiène styrène (ABS), de mélamine, de formaldéhyde urée, de résine phénolique, de polybutylène, d'oxyde de polyphényle ou de phénoplaste (PP).
